# EUROPEAN PATENT APPLICATION

(11) **EP 1 072 810 A1**
(43) Date of publication of application: **31.01.2001**
(21) Application number: 00830514.6
(22) Date of filing: 20.07.2000
(51) Int. Cl.: F16D 7/04

(54) **Improved transmission and torque-limiting joint**

(30) Priority: 29.07.1999 IT FI990174
(71) Applicant: Bondioli, Edi, I-46029 Suzzara, Mantova (IT)
(72) Inventor: Bondioli, Edi, I-46029 Suzzara, Mantova (IT)
(74) Representative: Mannucci, Michele

(57) **Abstract**

The inner member (3) of the joint forms the radial seats (18) for the sliders (20) which are urged outwards by springs accommodated in the inner member; the outer member (1) forms shaped recesses (5), into which the shaped outer ends of the sliders (20) can penetrate; a seating (107) is formed around the outer member (1), and in the outer member (1), in correspondence with each of said recesses (5), at least one hole is provided for a peg (109) which can glide in a substantially radial direction to project into the recess (5), leaf springs (112) accommodated in said seating (107) act on the respective pegs (109) to urge them to project into the recess (5) to obstruct the penetration of the slider (20) into the recess (5).

## Description

The invention relates to transmission and torque-limiting joints able to disengage the driven member from the driving member upon exceeding a maximum value of the transmitted torque and to allow re-engagement at a lesser value of the relative velocity. For example, Italian Patents 1 278 633 and 1 286 703 and the corresponding European Patent 0 733 820 and International Patent WO 98/06959 have disclosed a joint of this type having one of the two members outer and the other inner, and comprising: on the inner surface of said outer member, receptive recesses, developed parallel to the axis of rotation; in the inner member, substantially radial glide seats, equal in number to said receptive recesses; in each of said substantially radial glide seats, a slider adapted to glide radially, urged by elastic means in the centrifugal direction, having a shaped outer profile and adapted to penetrate into one of said receptive recesses of the outer member in order to transmit a torque between said two members, inner and outer, and generate centripetal radial thrusts on the slider.

The receptive recesses and the sliders are shaped in a manner such that, below a relative angular velocity between the two members, coupling may take place between them by penetration of the sliders into the recesses, which happens as a function both of the cooperating profiles of the recesses and of the sliders and of the elastic urging to which the sliders are subjected.

Disengagement between the two members takes place on exceeding a predetermined value of the transmitted torque; when disengagement has taken place, the driving member accelerates its own rotational motion and the condition of disengagement persists until the rotation of the driving member has fallen below the abovementioned limit.

The parameters which permit re-engagement can be modified in a highly complex manner and between rather circumscribed limits.

The object of the invention is to obtain - in a joint of the abovementioned type - the easy possibility of causing variations in the conditions which determine re-engagement between the driving member and the driven member, without difficult manipulations, rapidly and without requiring the presence of specialized operators.

These and other objects and advantages will become apparent from the text which follows.

A joint according to the invention - and of the abovementioned type - substantially comprises, in said outer member, in correspondence with each of said recesses, at least one peg which is movable in a substantially radial direction in order to project into the recess; furthermore, elastic means are provided in the outer member adapted to act on said peg by urging it to project into the recess.

In an advantageous embodiment, said peg can glide in a corresponding seat machined in the outer member.

The elastic means acting on each peg may be of any type, selected as a function of the space available and of the morphology of said outer member; and, advantageously, the elastic means will be capable of easy substitution.

An elastic means may also comprise a helical spring or the like, coaxial with the respective peg.

In a possible and advantageous embodiment, said elastic means are constituted by a flat spring, in other words a leaf spring, positioned with the ends in a housing surrounding the outer member and adapted centrally to urge the peg centripetally into said recess; the spring will be preloaded when installed and will be easily replaceable. The abovementioned seating may be developed annularly around the outer member and possess pairs of projections which cooperate with the ends of each spring and center it. The easy accessibility of the annular seating, and the simple projections which position the flat springs, permit easy replacement thereof, either in the event of possible breakages or in order to substitute existing springs with others of different characteristics in order to vary the effects thereof.

The invention will be better understood from the description and the attached drawing, which shows a practical, non-limiting example of embodiment of said invention. In the drawing:

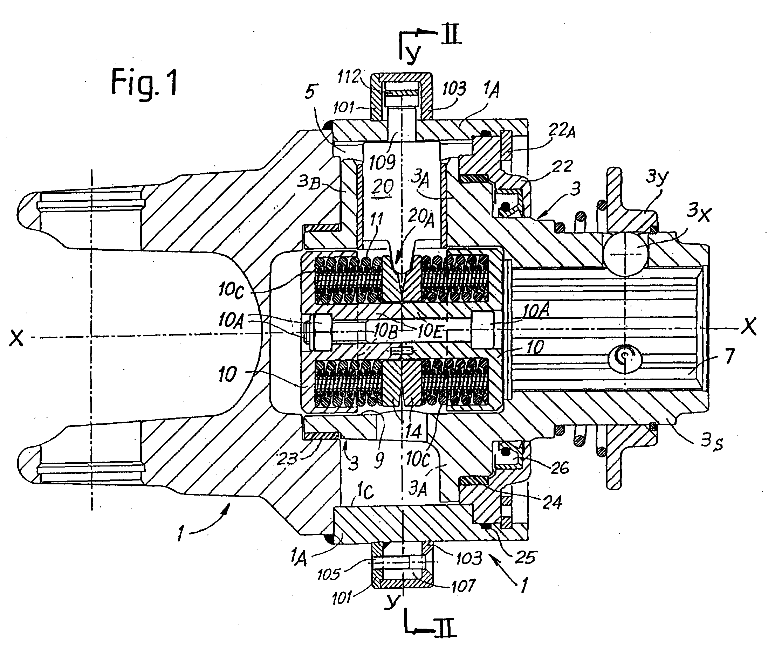

Fig. 1 shows a longitudinal section through two half-planes represented by the line I-I in Fig. 2;
Fig. 2 shows a cross section according to II-II in Fig. 1;
Figs. 3, 4 and 5 show a detail of the zone indicated by the arrow fX in Fig. 2, in a further three different attitudes of the elements shown;
Fig. 6 is analogous to the previous Figs. 3, 4, 5, but showing - on a larger scale - the conventional morphology which is thus deprived of any of the elements shown in the other figures, and in the state of disengagement; and

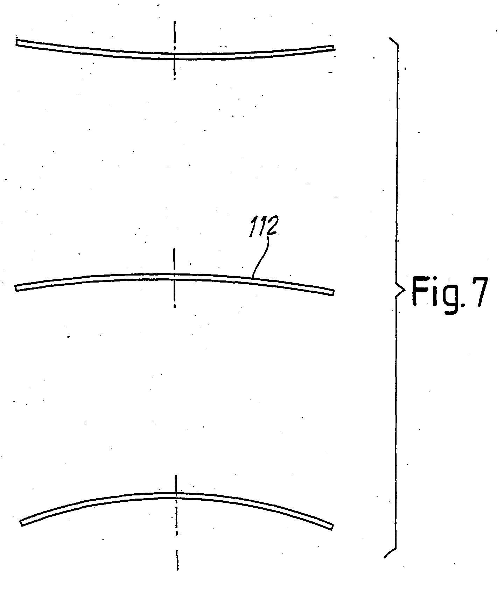

Fig. 7 shows three states of a leaf spring, released and in the two attitudes shown in Figs. 3 and 2.

According to what is depicted, the joint or coupling comprises - over the same plane, transverse to the axis of rotation X-X - at least four or more coupling units, radially oriented and mutually spaced at mutually different angles having, for example, the values of 75°, 95° and 105° (α, β , γ).

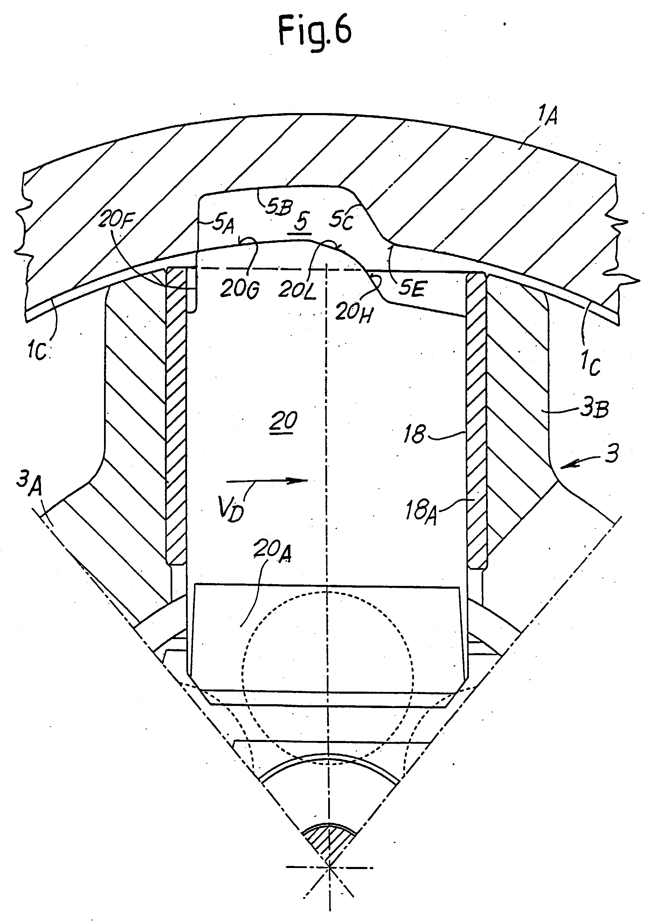

1 designates generically an outer member and 3 an inner member, one of the two members being driving and the other driven. In the drawing, the outer member 1 is a forked element with a fork 1A, for example of an articulated shaft and in particular of a cardan shaft; a skirt 1B is welded to the fork 1A and constitutes the outer part surrounding the inner member 3; this skirt 1B has, in particular, an inner surface 1C in the shape of a circular cylinder. Four recesses 5, mutually spaced angularly at the abovementioned angles, extend from said inner surface 1C of the outer member 1; each of said recesses exhibits (see Fig. 6) a first flank 5A of substantially radial extent, a bottom 5B having an extent corresponding to that of the inner surface 1C of the skirt 1B, a second flank 5C inclined with respect to a radial direction, and a junction 5E between the second flank 5C and said inner surface 1C of the skirt 1B of the outer member 1.

The inner member 3 has a hub 3a and an axial appendix 3S with an axial hole 7 which has longitudinal grooved profiles to allow rapid coupling or disengagement with a grooved shaft, with a spring-loaded ball-type 3X and ring-type 3Y retaining means or other equivalent retaining means which are known per se in the art. The hub 3A has four projections 3B which are angularly distributed in the same way as the recesses 5 and are externally delimited by portions of cylindrical surfaces substantially corresponding to those of the inner surface 1C of the skirt 1B of the outer member 1. An axial seat 9 is formed - as a continuation of the hole 7 - in the hub 3A and may be a cylindrical seat or other seat with its axis coinciding with the axis X-X of rotation of the joint formed by the two members 1 and 3. The seat 9 glidingly accommodates two reaction elements 10 which are symmetrical and opposite to one another; a connecting bolt 10A passes through axial expansions of the two reaction elements 10 and couples them. The opposing faces 10B of the two reaction elements 10 possess a plurality of seats having a cylindrical blind hole 10C (six in the drawing), in each of which a set of helical springs 11 is accommodated. Two symmetrical discoidal elements 14 are glidingly fitted onto the axial expansions 10E of the two reaction elements and are shown in particular in another simultaneous industrial property title of the same Applicant; the two discoidal elements 14 are elastically urged against one another by the sets of springs 11 which act upon them, reacting on the bottom of the seats 10C recessed into the reaction elements 10. Said discoidal elements 14 can move axially along the axial expansions 10E which guide them to glide into contact with the central holes of said discoidal elements 14.

The faces 14A of the two discoidal elements 14 - which are outer faces in the assembly of the two elements in a symmetrical attitude relative to the drawn plane Y-Y orthogonal to the axis X-X of rotation - are flat and the sets of springs 11 act thereupon. Each of the opposing and mutually facing surfaces of the two discoidal elements 14 typically possesses four shaped portions having planar surfaces which extend - in the frontal view - orthogonal to the directions of the angles at which the recesses 5 and the projections 3B are oriented.

Each of the projections 3B of the hub 3A of the inner member 3 exhibits a cylindrical radial glide seat 18 equipped with a tubular sleeve 18A adapted to reduce friction. The four glide seats 18 are angularly spaced in the same way as the recesses 5. A slider 20 glides in a radial direction in each radial glide seat (18), and has a cylindrical shape with both bases shaped. The inner base exhibits a wedge-shaped profile generally designated by 20A and planar surfaces parallel to a diameter. This inner profile exhibits two opposite surfaces corresponding to the surfaces 14B of the discoidal elements 14.

Each slider 20 exhibits an outer profile shaped substantially correspondingly with that of the recesses 5 and in particular the outer shaping exhibits (Fig. 6): a first substantially radial flank 20F which corresponds with the first flank 5A of the recess 5; an end surface 20G which extends substantially in a manner corresponding to the extent of the bottom 5B and of the surface 1C; a second flank 20H inclined substantially like the second flank 5C of the recess 5; and a junction 20L which extends between a said end surface 20G and said second flank 20H and which has an orientation substantially corresponding to that of said junction 5E of the recesses 5.

The hub 3A of the inner member 3 is held by a shaped annular cover 22 applied to the end of the cavity defined by the skirt 1B by means of an elastic ring 22A. Bearings 23, 24 are provided between the two members 1 and 3; suitable leaktight linings such as 25 and 26 will also be provided to ensure lubrication inside the cavity defined by the skirt 1B, for the operability of the components of the joint; the supply of lubricant will be ensured by suitable lubricators.

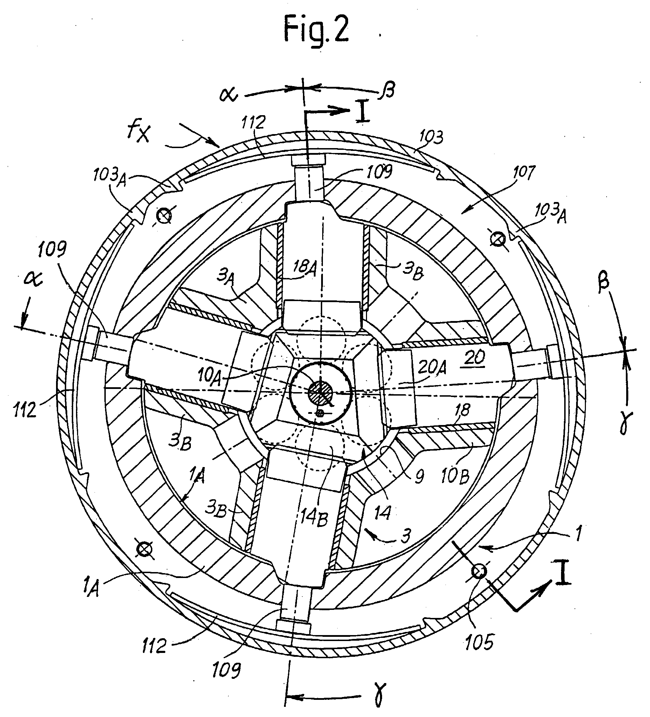

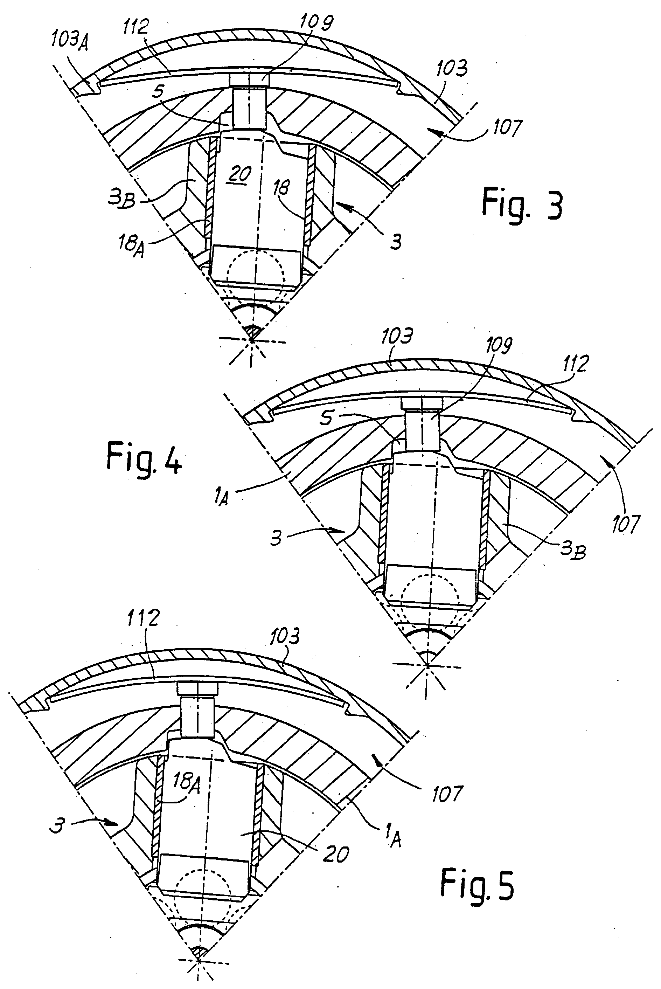

The urging of one slider or all the sliders in the centrifugal direction against the surface 1C is caused primarily by the springs 11 via the inclined surfaces of the discoidal elements 14 and of the wedge-shaped profiles 20A of the sliders 21. In the conditions of disengagement (see Fig. 6) a slider 20 which arrives at a recess 5 tends to penetrate therein and is obstructed in doing so by the relative velocity in direction VD of said slider 20 and of the inner member 3 relative to the outer member 1, until such relative velocity is greater than a certain value; specifically, the slider 20, having passed the angle of the surface 5A, tends to move into the recess 5 (see the attitudes shown in Figs. 4 and 5) but is abruptly rejected in the centripetal direction by the contact between the surfaces 20L and 5E if the velocity VD is greater than a certain limit; only when VD is reduced (to the point of tending toward zero) can the slider 20 regain the position of automatic re-engagement entirely occupying the recess 5 (Fig.2).

According to what is depicted, the joint or coupling comprises - over the same plane, transverse to the axis of rotation X-X - at least four or more engagement units, radially oriented and mutually spaced at mutually different angles having, for example, the values of 75°, 95° and 105° (α, β, γ).

1 designates generically art outer member and 3 an inner member, one of the two members being driving and the other driven. In the drawing, the outer member 1 is a forked element with a fork 1A, for example of an articulated shaft and in particular of a cardan shaft; a skirt 1B is welded to the fork 1A and constitutes the outer part surrounding the inner member 3; this skirt 1B has, in particular, an inner surface 1C in the shape of a circular cylinder. Four recesses 5, mutually spaced angularly at the abovementioned angles, extend from said inner surface 1C of the outer member 1; each of said recesses exhibits (see Fig. 6) a first flank 5A of substantially radial extent, a bottom 5B having an extent corresponding to that of the inner surface 1C of the skirt 1B, a second flank 5C inclined with respect to a radical direction, and a junction 5E between the second flank 5C and said inner surface 10 of the skirt 1B of the outer member 1.

The inner member 3 has a hub 3a and an axial appendix 3S with an axial hole 7 which has longitudinal grooved profiles to allow rapid engagement or disengagement with a grooved shaft, with a spring-loaded ball-type 3X and ring-type 3Y retaining means or other equivalent retaining means which are known per se in the art. The hub 3A has four projections 3B which are angularly distributed in the same way as the recesses 5 and are externally delimited by portions of cylindrical surfaces substantially corresponding to those of the inner surface 1C of the skirt 1B of the outer member 1. An axial seat 9 is formed - as a continuation of the hole 7 - in the hub 3A and may be a cylindrical seat or other seat with its axis coinciding with the axis X-X of rotation of the joint formed by the two members 1 and 3. The seat 9 glidingly accommodates two reaction elements 10 which are symmetrical and opposite to one another; a connecting bolt 10A passes through axial expansions 10E of the two reaction elements 10 and couples them. The opposing faces 10B of the two reaction elements 10 possess a plurality of seats having a cylindrical blind hole 10C (six in the drawing), in each of which a set of helical springs 11 is accommodated. Two symmetrical discoidal elements 14 are glidingly fitted onto the axial expansions 10E of the two reaction elements and are shown in another simultaneous industrial property title of the same applicant; the two discoidal elements 14 are elastically urged against one another by the sets of springs 11 which act upon them, reacting on the bottom of the seats 10C recessed into the reaction elements 10. Said discoidal elements 14 can move axially along the axial expansions 10E which guide them to glide into contact with the central holes of said discoidal elements 14.

The faces 14A of the two discoidal elements 14 - which are outer faces in the assembly of the two elements in a symmetrical attitude relative to the drawn plane Y-Y orthogonal to the axis X-X of rotation - are flat and the sets of springs 11 act thereupon. Each of the opposing and mutually facing surfaces of the two discoidal elements 14 typically possesses four shaped portions having flat surfaces which extend - in the frontal view - orthogonal to the directions of the angles at which the recess 5 and the projections 3B are oriented.

Each of the projections 3B of the hub 3A of the inner member 3 exhibits a cylindrical radial glide seat 18 equipped with a tubular sleeve 18A adapted to reduce wear. The four glide seats 18 are mutually angularly spaced in the same way as the recesses 5. A slider 20 glides in a radial direction in each radial glide seat, and has a cylindrical shape with both bases shaped. The inner base exhibits a wedge-shaped profile generally designated by 20A having plane surfaces parallel to a diameter. This inner profile exhibits two opposite surfaces corresponding to the surfaces 14B of the discoidal members 14..

Each slider 20 exhibits an outer profile shaped substantially correspondingly with that of the recesses 5 and in particular the outer shaping exhibits (Fig. 6): a first substantially radial flank 20F which corresponds with the first flank 5A of the recess 5; an end surface 20G which extends substantially in a manner corresponding to the extent of the bottom 5B and of the surface 1C; a second flank 20H inclined substantially like the second flank 5C of the recess 5; and a junction 20L which extends between a said end surface 20G and said second flank 20H and which has an orientation substantially corresponding to that of said junction 5E of the recesses 5.

The hub 3A of the inner member 3 is held by a shaped annular cover 22 applied to the end of the cavity defined by the skirt 1B by means of an elastic ring 22A. Bearings 23, 24 are provided between the two members 1 and 3; suitable leaktight linings such as 25 and 26 will also be provided to ensure lubrication inside the cavity defined by the skirt 1B, for the operability of the components of the joint; the supply of lubricant will be ensured by suitable lubricators.

The invention makes it possible to vary the conditions as a result of which automatic re-engagement takes place without it being necessary to alter the morphology of the wedge-shaped profiles 20A and of the discoidal members 14, and without modifying the springs 11, but creating a further elastic obstacle to the penetration of the slider 20 into the recesses 5, in a manner such as to further reduce the value of the relative velocity VD below that at which automatic re-engagement takes place.

In order to achieve this, the conventional morphology (Fig. 6) is supplemented with that shown in the other figures. An annular seating 107 is created around the skirt 1A of the outer member 1, by means of a flange 101 and a ring 103 fixed thereon by screws 105. In correspondence with each of the recesses 5, a radial hole is made passing between the recess 5 and the annular seating 107; in said hole is accommodated a radially movable peg 109 which can project into the recess 5, being centripetally urged therein by a respective flat spring 112, in other words a leaf spring, which is accommodated in the annular seating, 107 and held by projections 103A formed by the ring 103. Each peg 109 tends to obstruct (Figs. 3, 4 and 5) elastically and thus delay the penetration of the slider 20 into the recess 5, causing the surfaces 201 and 5E to come into contact, preventing re-engagement, until such time as the relative velocity VD is reduced to such a point as to give the slider time to complete the thrusting of the peg 109 (against the action of the spring 112) and to penetrate completely (Figs. 5 and 2) into the recess 5, thus achieving automatic re-engagement of the torque limiter constituted by the members 1, 3.

In order to modify the limit value of the relative velocity VD below that at which the coupling takes place, it is sufficient to substitute the springs 112 with others of different characteristics.

In the solution shown (and also described in another simultaneous industrial property right of the same Applicant) the coupling of the torque limiter is achieved in order to obtain a unique angular coupling position, varying the angular distance between the recesses 5 and correspondingly also the distance between the sliders 20. When coupling in any angular position is sufficient, the abovementioned angular distances are made mutually equal. However, the combined effect of the differentiated angular distances between the recesses 5 and between the sliders 20 and of the presence of the discoidal elements 14 on which the springs act brings the advantage of avoiding, or at least greatly reducing, damage and wear on the cooperating surfaces of the coupling, in particular between the surfaces of the recesses 5 and between the sliders 20 during the conditions in which disengagement between the two members persists. Specifically, on the one hand the occasions on which each slider 20 is pushed away in passing in front of a recess are reduced, and on the other hand the springs 11 act on the sliders 20 to urge them to penetrate into the recesses 5 only when the reciprocal angular positioning between the members 1 and 3 takes place, in which coupling can occur.

Disengagement between the two members 1 and 3 takes place as a result of cooperateion between the contact surfaces 20H and 5C in the conventional manner when the torque transmitted by the contact pressure between these surfaces exceeds the intended limit, under which conditions the sliders 20 are thrust inwards and wedges 20A thus spread the annular elements 14.

It is understood that the drawing shows only an example, given solely by way of a practical demonstration of the invention, said invention being capable of variation in shapes and arrangements without thereby departing from the scope of the concept underlying said invention. The presence of any reference numbers in the appended claims serves the purpose of facilitating reading of the claims with reference to the description and the drawing, and does not limit the scope of protection represented by the claims.

## Claims

1. A transmission and torque-limiting joint able to disengage the driven member from the driving member upon exceeding a maximum value of the transmitted torque and to allow recoupling at a lesser value of the relative velocity, one of the two members being outer and the other inner, comprising: on the inner surface (1C) of said outer member (1), receptive recesses (5), developed parallel to the axis of rotation; in the inner member (3), substantially radial glide seats (18) defined by two planar walls parallel to the axis of rotation of the joint, said substantially radial glide seats (18) being equal in number to said receptive recesses (5); in each of said substantially radial glide seats (18), a slider (20), able to glide radially urged by elastic means in the centrifugal direction, and with an outer profile which is shaped and able to penetrate into one of said receptive recesses (5) of the outer member (1, 1B) in order to transmit a torque between said two members, inner (3) and outer (1), and generate centripetal radial thrusts on the slider (20); characterized in that it comprises in said outer member (1), in correspondence with each of said recesses (5), at least one peg (109) which is movable in a substantially radial direction in order to project into the recess, and, in the outer member, elastic means adapted to act on said peg to urge it to project into the recess.

2. Joint as claimed in claim 1, characterized in that said peg (109) can glide in a corresponding seat machined in the outer member (1).

3. Joint as claimed in claim 1 or 2, characterized in that said elastic means are constituted by a flat spring (112), in other words a leaf spring, positioned with the ends in a seating (107) surrounding the outer member (1) and adapted to urge the peg (109) centripetally into the recess (5); said spring (112) being preloaded when installed.

4. Joint as claimed in claim 3, characterized in that said seating (107) is developed annularly around the outer member (1) and possesses pairs of projections (103A) which interact with the ends of each spring (112).

5. Joint as claimed at least in claim 1, characterized in that said receptive recesses (5) are mutually spaced at different angles and, correspondingly, said sliders (20) are also mutually spaced at different angles.

6. Improved transmission and torque-limiting joint, all as described above and shown by way of example in the attached drawing.
